# EUROPÄISCHE PATENTANMELDUNG

(11) **EP 0 816 659 A1**
(43) Veröffentlichungstag der Anmeldung: **07.01.1998**
(21) Anmeldenummer: 97114046.2
(22) Anmeldetag: 01.07.1994
(51) Int. Cl.: F02D 43/00, F02D 37/02, F02D 41/06, F01N 3/18, F02P 5/04

(54) **Verfahren zum Betrieb einer Fahrzeug-Brennkraftmaschine**

(30) Priorität: 19.08.1993 DE 4327882
(62) Teilanmeldung aus: 94110245.1
(71) Anmelder: Czub, Ekkardt, 74193 Schwaigern (DE)
(72) Erfinder: Czub, Ekkardt, 74193 Schwaigern (DE)
(74) Vertreter: Staudt, Hans-Peter, Dipl.-Ing.

(57) **Zusammenfassung**

Bei einem Verfahren zum Betrieb einer fremdgezündeten Fahrzeug-Brennkraftmaschine mit einem Einlaßsystem, das ein die Luftmasse bestimmendes System, eine willkürlich durch ein Gaspedal betätigbare Drosselklappe und eine elektronische, unter anderem in Abhängigkeit von dem gemessenen Luftvolumenstrom geregelte Kraftstoff-Einspritzanlage aufweist, und mit einem Auslaßsystem mit einem Katalysator, wird zum schnellen Erwärmen des Katalysators auf Anspringtemperatur vorgeschlagen, daß vom Start weg unabhängig von der Gaspedalstellung ein Mindest-Luftvolumenstrom eingestellt und gleichzeitig der Zündzeitpunkt in Richtung 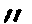 spät" verstellt wird, und daß bei Vorliegen einer vorgegebenen Betriebsbedingung die Spätverstellung des Zündzeitpunktes zurückgenommen und die Einstellung des Mindestluftvolumenstromes aufgehoben wird.

## Beschreibung

Die Erfindung betrifft ein Verfahren zum Betrieb einer fremdgezündeten, wassergekühlten Fahrzeug-Brennkraftmaschine entsprechend dem Oberbegriff des Anspruchs 1.

Aufgrund der immer schärfer werdenden Abgasgrenzwerte ist es erforderlich, den Katalysator möglichst schnell auf seine Anspringtemperatur zu bringen.

Es ist bekannt (Bosch, Technische Berichte 7, 1981, 3, S. 139-151), daß durch Verstellen des Zündzeitpunktes in Richtung 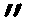 spät" die Abgastemperatur erhöht werden kann. Läuft die Brennkraftmaschine jedoch nach dem Start zunächst im Leerlauf oder mit geringer Last, so reicht der mit einer solchen Zündzeitpunkt-Verstellung erzielte Temperaturgradient im Katalysator nicht aus, um diesen in der vorgeschriebenen kurzen Zeit auf die Anspringtemperatur zu bringen.

Es ist auch bekannt, durch Einbringen von Sekundärluft in das Abgassystem ein konventionell durch die Brennkraftmaschine befördertes, fettes Kraftstoff-Luftgemisch nachzuverbrennen, wobei meist ein später Zündzeitpunkt unterstützend vorgesehen wird. Die so erreichbaren Temperaturgradienten können ein schnelles Anspringen des Katalysators innerhalb der ersten Minute nach dem Start selbst im Leerlauf sicherstellen. Nachteilig bei diesem System ist der große Bauaufwand, verbunden mit einem relativ hohen Ausfallrisiko, da bei einigen Bauteilen sowohl eine thermische als auch eine chemische und verschmutzungsrelevante Belastung vorliegt. Weiterhin ist bei ausschließlichem Kurzstreckenverkehr durch das sehr fette Gemisch die Gefahr einer Verrußung der Kerzen gegeben.

Aus der CA-PS 1 136 016 ist ein System zum schnellen Anwärmen des Katalysators bekannt, bei dem folgende Mittel vorgesehen sind:
erste Mittel, welche erkennen, ob die Katalysator-Temperatur unter der Anspringtemperatur liegt,
zweite Mittel, welche feststellen, ob die Brennkraftmaschine im Leerlauf ist,
dritte Mittel zur Verzögerung des Zündzeitpunktes,
vierte Mittel zur Erhöhung der Leerlaufdrehzahl,
fünfte Mittel, welche die dritten und vierten Mittel aktivieren, wenn die Katalysatortemperatur unter dem Anspringwert ist und wenn die Brennkraftmaschine im Leerlauf läuft, und welche die dritten und vierten Mittel deaktivieren, wenn der Katalysator die Anspringtemperatur erreicht hat und/oder die Drehzahl über der Leerlaufdrehzahl liegt.

Die ersten Mittel können dabei von einem Sensor gebildet sein, der die Kühlwassertemperatur der Brennkraftmaschine mißt. Die Erhöhung der Leerlaufdrehzahl kann durch Anstellen der Drosselklappe aus der Leerlaufstellung oder durch eine die Drosselklappe umgehende Bypassleitung erfolgen, in der ein Ventil angeordnet ist, das geöffnet wird, wenn die Kühlwassertemperatur unter dem vorbestimmten Wert liegt und die Drosselklappe geschlossen ist. Bei diesem bekannten System wird also im Leerlauf die Menge des angesaugten Kraftstoff-Luftgemisches erhöht und gleichzeitig der Zündzeitpunkt zurückgenommen, wodurch einerseits ein übermäßiges Ansteigen der Drehzahl vermieden und andererseits die Abgastemperatur erhöht wird. Nachteilig ist jedoch, daß dieses System nur im Leerlauf, also bei geschlossener Drosselklappe wirksam ist und sofort außer Betrieb gesetzt wird, wenn der Fahrer wegfährt und zu diesem Zweck mit dem Gaspedal die Drosselklappe aus ihrer Schließstellung bringt. Wenn der Fahrer nicht mit hoher Last losfährt, was im allgemeinen nicht der Fall ist, so verstreicht auch bei diesem bekannten System geraume Zeit, bis der Katalysator seine Anspringtemperatur erreicht hat.

Aufgabe der Erfindung ist es, ein Verfahren zum Betrieb einer Fahrzeug-Brennkraftmaschine der gattungsgemäßen Art zu schaffen, bei dem ohne großen zusätzlichen Aufwand sichergestellt ist, daß der Katalysator sehr schnell seine Anspringtemperatur erreicht.

Die Lösung dieser Aufgabe ist im Patentanspruch 1 angegeben. Vorteilhafte Ausführungsformen sind in den Unteransprüchen definiert.

Dadurch, daß bei dem erfindungsgemäßen Vorschlag unabhängig von der Gaspedalstellung ein Mindest-Luftvolumenstrom eingestellt wird, der eine entsprechende Kraftstoff-Zumessung durch den Luftmassenmesser zur Folge hat, wird zusammen mit der Zündzeitpunktverstellung auf 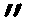 spät" eine sehr schnelle Erwärmung des Katalysators auf Anspringtemperatur erreicht, unabhängig davon, ob die Drosselklappe durch Betätigung des Gaspedals geöffnet wird, um das Fahrzeug in Bewegung zu setzen. Erst bei Vorliegen mindestens einer vorbestimmten Betriebsbedingung wird die Spätverstellung des Zündzeitpunktes zurückgenommen und die Einstellung des zusätzlichen Luftvolumenstromes aufgehoben.

Der zusätzliche Luftvolumenstrom kann dabei, wie in der CA-PS 1 136 016 vorgeschlagen, durch Anstellen der Drosselklappe erfolgen, was insbesondere bei Verwendung eines elektrischen Gaspedals eine einfache Möglichkeit darstellt, oder durch eine die Drosselklappe umgehende Bypassleitung mit einem Ventil, das bei Erreichen der vorbestimmten Einspritzmenge geschlossen wird.

Die vorbestimmte Betriebsbedingung kann darin bestehen, daß die Brennkraftmaschine über einen bestimmten Zeitraum mit höherer Last gefahren oder das Fahrzeug auf eine bestimmte Geschwindigkeit beschleunigt wurde. Es ist zudem möglich, die Spätverstellung des Zündzeitpunktes und die Einstellung des zusätzlichen Luftvolumenstroms dann aufzuheben, wenn seit dem Start eine vorbestimmte Kraftstoffmenge eingespritzt wurde.

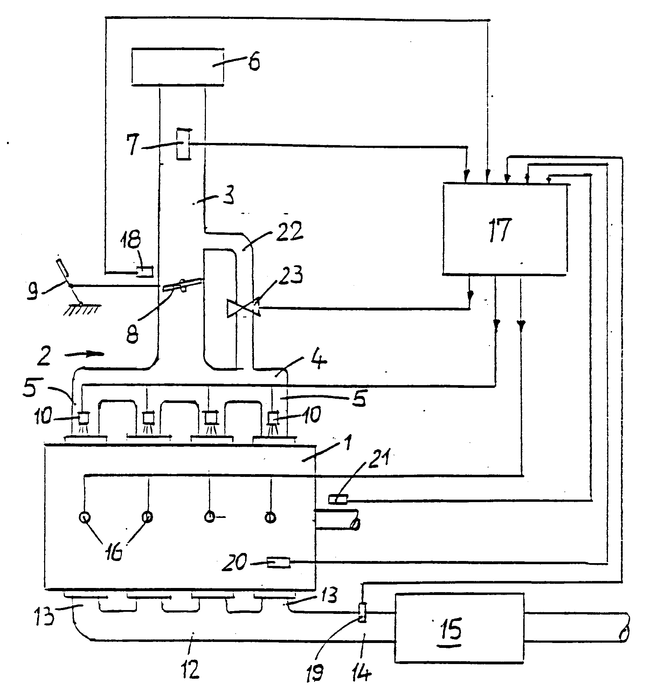

Ein Ausführungsbeispiel einer Anlage zur Durchführung des erfindungsgemäßen Verfahrens ist in der Zeichnung schematisch dargestellt.

Mit 1 ist eine fremdgezündete, wassergekühlte Vierzylinder-Brennkraftmaschine für den Antrieb eines Kraftfahrzeuges bezeichnet, die ein Einlaßsystem 2 mit einem Saugrohr 3 und einem Einlaßverteiler 4 aufweist, von dem Einzelsaugrohre 5 zu den einzelnen Zylindern ausgehen. Das Saugrohr 3 ist an einen Luftfilter 6 angeschlossen. In dem Saugrohr 3 ist ein die Luftmasse messendes oder berechnendes System 7 und stromabwärts desselben eine Drosselklappe 8 angeordnet, die willkürlich durch ein Gaspedal 9 betätigbar ist. In den Einzelsaugrohren 5 ist jeweils ein Kraftstoff-Einspritzventil 10 vorgesehen. Das Auslaßsystem 11 der Brennkraftmaschine 1 weist einen Auspuffkrümmer 12 auf, der mit den einzelnen Zylindern durch Auspuffkanäle 13 verbunden ist und an den sich eine Abgasleitung 14 anschließt, in der ein Katalysator 15 angeordnet ist. Jedem Zylinder der Brennkraftmaschine ist eine Zündkerze 16 zugeordnet. Mit 17 ist ein elektronisches Steuergerät bezeichnet, das die Einspritzventile 10 und den Zündzeitpunkt in Abhängigkeit von Eingangssignalen steuert, die es von dem System 7, einem Drosselklappensensor 18, einer Lambdasonde 19 in der Abgasleitung 14 stromauf des Katalysators 15, einem die Temperatur des Kühlwassers erfassenden Sensor 20 und einem Drehzahlsensor 21 erhält.

Um eine schnelle Erwärmung des Katalysators 15 auf seine Anspringtemperatur nach dem Starten der Brennkraftmaschine 1 zu erreichen, ist im Ausführungsbeispiel eine die Drosselklappe 8 umgehende Bypass-Leitung 22 vorgesehen, in der ein Ventil 23 angeordnet ist, das ebenfalls von dem elektronischen Steuergerät 15 gesteuert wird. Beim Starten der Brennkraftmaschine wird das Ventil 23 geöffnet, wodurch ein zusätzlicher Luftvolumenstrom angesaugt wird, der von dem System 7 erfaßt wird, das ein entsprechendes Signal an das Steuergerät 17 gibt, wodurch die Einspritzventile 10 zum Einspritzen einer entsprechenden Kraftstoffmenge betätigt werden. Der dadurch entstehende, ungewollte Leistungsüberschuß wird dadurch kompensiert, daß von dem Steuergerät 17 der Zündzeitpunkt in Richtung 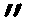 spät" verstellt wird. Dadurch wird der Wirkungsgrad der Verbrennung analog zu dem ungewollten Leistungsüberschuß verschlechtert und gleichzeitig die Abgastemperatur erhöht, was zusammen zu einem schnellen Anspringen des Katalysators 15 führt. Bei der Ansteuerung des Ventils 23 wird durch geeignete Zündwinkelverstellung, beispielsweise durch ein in dem Steuergerät 17 abgelegtes Zündwinkeloffsetkennfeld, über Drosselklappenwinkel und Drehzahl mit und ohne Zusatzluft auf ein gleichbleibendes Moment sowohl im Leerlauf als auch im Fahrbetrieb geregelt. Sobald das Steuergerät 17 einen bestimmten vorgegebenen Betriebsparameter erkennt, wodurch eine bestimmte Betriebsbedingung der Brennkraftmaschine charakterisiert wird, wird das Ventil 23 schnell oder auch allmählich geschlossen. In gleichem Maße wird die Spätverstellung des Zündzeitpunktes zurückgenommen.

Wenn die Drosselklappe 8 von dem Gaspedal 9 zum Wegfahren allmählich geöffnet wird, vergrößert sich der von dem System 7 gemessene Volumenstrom und damit die eingespritzte Kraftstoffmenge, was zu einer noch schnelleren Aufheizung des Katalysators 15 führt, so daß die Spätverstellung des Zündzeitpunktes bald zurückgenommen und der dadurch bewirkte erhöhte Kraftstoffverbrauch verringert wird. Ohne die Bypassleitung 22 würde der zum schnellen Aufheizen des Katalysators nötige Luftvolumenstrom erst bei einem schnellen und weitgehenden Öffnen der Drosselklappe 8 vorliegen, während beim normalen Anfahren mit nur leicht geöffneter Drosselklappe auch bei Verstellen des Zündzeitpunktes in Richtung 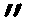 spät" eine geraume Zeit verstreichen wurde, bis der Katalysator 15 seine Anspringtemperatur erreicht hat.

Abweichend von dem dargestellten Ausführungsbeispiel kann die für den Mindest-Luftvolumenstrom benötigte Zusatzluftmenge nach dem Starten der Brennkraftmaschine 1 auch dadurch erreicht werden, daß die Drosselklappe 8 durch nicht gezeigte Mittel unabhängig von der Stellung des Gaspedals 9 geöffnet wird. Dies ist relativ einfach insbesondere bei einem sogenannten elektrischen Gaspedal zu verwirklichen, bei dem die Stellung des Gaspedals 9 elektronisch auf die Drosselklappe 8 übertragen wird. Diese Elektronik wird dann durch das Steuergerät 17 derart beeinflußt, daß die Drosselklappe 8 entsprechend angestellt wird.

Die Zurücknahme der Spätverstellung kann dann erfolgen, wenn der Temperaturfühler 20 eine bestimmte Kühlwassertemperatur ermittelt, die erst nach einer gewissen Betriebsdauer erreicht wird. Läuft die Brennkraftmaschine über einen bestimmten Zeitraum mit höherer Last, so ist ebenfalls anzunehmen, daß der Katalysator seine Anspringtemperatur erreicht hat. Die Dauer eines solchen Betriebes kann durch entsprechende Software im Steuergerät 17 festgestellt werden. Schließlich ist auch nach einer Beschleunigung des Fahrzeuges auf einen vorgegebenen Wert anzunehmen, daß der Katalysator angesprungen ist. Auch dies läßt sich durch entsprechende Software in dem Steuergerät 17 feststellen.

## Patentansprüche

1. Verfahren zum Betrieb einer fremdgezündeten Fahrzeug-Brennkraftmaschine mit
- einem Einlaßsystem, das ein die Luftmasse messendes oder berechnendes System, eine willkürlich durch ein Gaspedal betätigbare Drosselklappe und eine elektronische, u.a. in Abhängigkeit von dem Luftvolumenstrom geregelte Kraftstoff-Einspritzanlage aufweist,
- einer Einrichtung zur Verstellung des Zündzeitpunktes, und
- einem Auslaßsystem mit einem Katalysator, wobei beim Starten der Brennkraftmaschine durch Einstellen eines zusätzlichen Luftvolumenstromes im Einlaßsystem ein zum schnellen Aufheizen des Katalysators erforderlicher Mindest-Luftvolumenstrom vorgesehen und der Zündzeitpunkt in Richtung spät verstellt wird und nach Erreichen eines bestimmten Betriebszustandes die Spätverstellung des Zündzeitpunktes zurückgenommen und die Einstellung des Mindest-Luftvolumenstromes aufgehoben wird,
dadurch gekennzeichnet, daß
die Einstellung des Mindest-Luftvolumenstromes unabhängig von der Gaspedalstellung auch außerhalb des Leerlaufes erfolgt und der Zündzeitpunkt derart in Richtung spät verstellt wird, daß der durch den zusätzlichen Luftvolumenstrom erzeugte ungewollte Leistungsüberschuß kompensiert wird,
und daß in Abhängigkeit von mindestens einem Betriebsparameter die Spätverstellung des Zündzeitpunktes zurückgenommen und die Einstellung des Mindest-Luftvolumenstromes aufgehoben wird.

2. Verfahren nach Anspruch 1, dadurch gekennzeichnet, daß der zusätzliche Luftvolumenstrom durch ein Ventil in einer die Drosselklappe umgehenden Bypass-Leitung eingestellt wird und dieses Ventil in Abhängigkeit von mindestens einem Betriebsparameter geschlossen wird.

3. Verfahren nach Anspruch 1, dadurch gekennzeichnet, daß der zusätzliche Luftvolumenstrom durch unabhängig von der Stellung des Gaspedals erfolgendes Anstellen der Drosselklappe eingestellt wird und diese Anstellung in Abhängigkeit von mindestens einem Betriebsparameter zurückgenommen wird.

4. Verfahren nach einem der Ansprüche 2 und 3, dadurch gekennzeichnet, daß die Rücknahme der Spätverstellung, das Schließen des Ventils bzw. die Rücknahme der Anstellung der Drosselklappe in Abhängigkeit von mindestens einem Betriebsparameter allmählich erfolgt.

5. Verfahren nach einem der vorstehenden Ansprüche, dadurch gekennzeichnet, daß die Betriebsbedingung, bei deren Vorliegen die Spätverstellung des Zündzeitpunkts zurückgenommen und die Einstellung des Mindest-Luftvolumenstroms aufgehoben wird, dann gegeben ist, wenn eine vorgegebene Kühlwassertemperatur erreicht ist, wenn die Brennkraftmaschine über eine vorgegebene Zeitdauer mit höherer Last betrieben wurde oder wenn das Fahrzeug auf einen vorbestimmten Wert beschleunigt wurde.
